# EUROPEAN PATENT SPECIFICATION

(11) **EP 2 905 487 B1**
(45) Date of publication and mention of the grant of the patent: **18.09.2019**
(21) Application number: 13843945.0
(22) Date of filing: 27.09.2013
(51) Int. Cl.: F16C 33/18, F16C 33/20, B32B 5/02, B32B 15/16, B32B 5/30

(54) **MULTILAYER SLIDING MEMBER AND METHOD FOR MANUFACTURING MULTILAYER SLIDING MEMBERS**
MEHRSCHICHTIGES GLEITELEMENT UND VERFAHREN ZUR HERSTELLUNG MEHRSCHICHTIGER GLEITELEMENTE
ÉLÉMENT DE GLISSEMENT MULTICOUCHES ET PROCÉDÉ DE FABRICATION D'ÉLÉMENTS DE GLISSEMENT MULTICOUCHES

(30) Priority: 01.10.2012 JP 2012219336
(43) Date of publication of application: 12.08.2015
(73) Proprietor: Oiles Corporation, Tokyo 108-0075 (JP)
(72) Inventor: OKUBO, Kentaro, Fujisawa-shi Kanagawa 252-0811 (JP)
(74) Representative: Strehl Schübel-Hopf & Partner
(86) International application number: PCT/JP2013/076381
(87) International publication number: WO 2014/054544

(56) References cited:
- DE-A1-102004 057 190
- DE-A1-102007 016 734
- JP-A- H0 369 813
- JP-A- S58 180 837
- JP-A- S58 180 837
- JP-A- S62 215 123
- JP-A- 2008 303 914
- JP-A- 2008 303 914
- JP-A- 2009 103 194
- JP-A- 2009 103 194
- US-A1- 2010 136 866

## Description

### Technical Field

The present invention relates to a method for manufacturing a sliding member such as a sliding bearing, and particularly a multi-layer sliding member, in which a sliding layer is formed on backing material.

### Background Art

Patent Literature 1 discloses a multi-layer sliding bearing that is used under the high load condition and can realize low friction performance without lubrication for a long time. This multi-layer sliding bearing is manufactured according to the following procedure.

A metal-powder sintered layer of porous structure is formed on a metal plate which is backing material, and phenol resin which is a binder is applied onto the metal-powder sintered layer to a prescribed thickness. Further, thereon, union cloth to form a sliding layer is placed, and heated and cured without pressurization so that the metal-powder sintered layer and the union cloth are bonded. Here, the union cloth is produced by a special weave such as twill weave or sateen weave using PTFE (polytetrafluoroethylene) fiber which is lubricating resin fiber and PA (polyamide) fiber which is resin fiber having high compatibility with phenol resin and is superior in strength properties, so that the PTFE fiber is positioned along the sliding direction and part of the PA fiber is exposed and scattered in the sliding surface.

DE 10 2007 016734 A1 discloses a manufacturing method for a sliding members with the features in the pre-characterising portions of the independent claims. Another manufacturing method related to the one of the present invention is disclosed in US 2010/136866 A1. DE 10 2004 057190 discloses the use of PET fibers as reinforcing fibers in sliding members.

### Citation List

### Patent Literature

Patent Literature 1: Japanese Unexamined Patent Application Laid-Open No. 2000-154824

### Summary of Invention

### Technical Problem

However, the multi-layer sliding bearing described in Patent Literature 1 uses PA fiber that is relatively costly among fiber materials although it has high compatibility with phenol resin. Further, it is necessary to produce the union cloth by special weave such as twill weave or sateen weave of PTFE fiber and PA fiber so that PTFE fiber is positioned along the sliding direction and part of PA fiber is exposed to be scattered in the sliding surface. Accordingly, material costs and production costs of the union cloth are high.

Further, it is necessary to impregnate phenol resin which is the binder into the union cloth placed on the metal-powder sintered layer. To that end, it is necessary to apply the phenol resin onto the metal-powder sintered layer in a state that the phenol resin can keep a prescribed thickness for a prescribed period of time. Accordingly, it is necessary to use high-viscosity phenol resin as the phenol resin with which the union cloth is impregnated. Thus, it is impossible to apply the phenol resin smoothly onto the metal-powder sintered layer. Further, the high-viscosity phenol resin tends to keep bubbles of gas or the like, and this can affect the quality of the multi-layer sliding bearing.

Further, the multi-layer sliding bearing described in Patent Literature 1 can realize low friction without lubrication for long use under the high load. However, since the sliding layer is formed of the resin material, long-term use under the high load can cause creep deformation. Thus, large change in dimension of the sliding layer may occur in the course of use under the high load, so that a gap between the sliding surface and the outer peripheral surface of the shaft may become larger than the proper gap, and the sliding performance may be reduced significantly.

The present invention has been made considering the above situation. An object of the present invention is to provide a method for manufacturing a multi-layer sliding member that can be manufactured to have stable quality efficiently at low cost and that is small in dimension change for use under the high load.

### Solution to Problem

To solve the above problems, the method for manufacturing a multi-layer sliding member of the present invention is defined as set out in the independent claims. Further advantageous features are set out in the dependent claims.

Here, as the binder, is used low-viscosity thermosetting resin (low-viscosity phenol resin, epoxy resin, or the like) that has high compatibility the phenol resin used for the prepreg. Further, PTFE fiber as resin fiber for giving lubricating performance may be woven into the woven cloth according to sliding performance required for the sliding layer. Further, a metal plate is used as the backing material and a metal-powder sintered layer is formed on a surface of the metal plate, so that the metal-powder sintered layer is interposed between the metal plate and the sliding layer.

For example, the present invention provides a multi-layer sliding member whose sliding layer is formed on backing material, wherein:
the sliding layer is formed of woven cloth impregnated with phenol resin, and has been plastically deformed by pressurizing in the thickness direction of the sliding layer.

Here, the multi-layer sliding member may be the following multi-layer sliding member. That is to say, the multi-layer sliding member further comprises binder that lies between the backing material and the sliding layer;
the sliding layer is formed of at least one sheet of prepreg formed by impregnating the phenol resin into the woven cloth, which includes PET fiber as reinforcing resin fiber;
the binder is a low-viscosity thermosetting resin that has high compatibility with the phenol resin used for the prepreg; and
the prepreg has been plastically deformed.

### Advantageous Effects of Invention

The present invention uses woven cloth, which contains relatively-cheap PET as reinforcing resin fiber and does not require a special weave. Therefore, the material cost and the manufacturing cost of the woven cloth can be reduced. Further, the prepreg previously impregnated with phenol resin is used as the woven cloth which is the sliding layer, therefore it is not necessary to impregnate binder into woven cloth placed on the metal-powder sintered layer. Thus, it is not necessary to keep the binder in a prescribed thickness for a prescribed period of time, and a low-viscosity binder can be used. Accordingly, the binder can be applied smoothly onto the metal-powder sintered layer. This improves the manufacturing efficiency of the multi-layer sliding member. At the same time, bubbles of gas or the like are hardly brought in the binder, therefore the quality of the multi-layer sliding member is improved furthermore. Further, the prepreg which is the sliding layer, is plastically deformed in advance, by pressurizing with force larger than the assumed load when using. Therefore, creep-deformation of the sliding layer can be prevented even in the case of long-term use under high load condition. This can reduce the amount of the dimension change of the sliding layer. Accordingly, it is possible to maintain the suitable gap between the sliding layer and the outer peripheral surface of a shaft, and to maintain good sliding characteristics for a long period of time.

### Brief Description of Drawings

Fig. 1 is a cross-section view showing a multi-layer sliding member 1 according to one embodiment of the present invention;
Fig. 2 is a view for explaining a manufacturing process according to a first method for manufacturing a multi-layer sliding member 1 of one embodiment of the present invention; and
Fig. 3 is a view for explaining a manufacturing process according to a second method for manufacturing a multi-layer sliding member 1 of one embodiment of the present invention.

### Description of Embodiments

In the following, embodiments of the present invention will be described referring to the accompanying drawings.

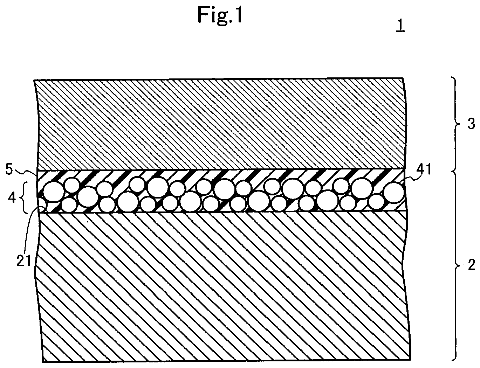

Fig. 1 is a cross-section view showing a multi-layer sliding member 1 according to an embodiment of the present invention.

As shown in the figure, themulti-layer sliding member 1 of the present embodiment comprises: a metal plate 2 such as a steel plate, which is backing material; prepreg 3 that forms a sliding layer; and a binder 5 that bonds the metal plate 2 and the prepreg 3 together.

On one surface (the surface opposed to the prepreg 3) 21 of the metal plate 2, is formed a metal-powder sintered layer (for example, spherical-metal-powder sintered layer obtained by sintering spherical metal powder particles 41) 4 of porous structure.

The binder 5 is applied onto the metal-powder sintered layer 4 on the one surface 21 of the metal plate 2, and is impregnated into the surface of the metal-powder sintered layer 4 or into the metal-powder sintered layer 4. As the binder 5, is used thermosetting resin which has high compatibility with the below-mentioned phenol resin used for the prepreg 3 and has lower viscosity than that of the phenol resin. As the thermosetting resin, there are low-viscosity phenol resin, epoxy resin, and the like. For example, it is possible to use a low-viscosity phenol resin (for example, Resitop PL-4222 made by Gunei Chemical Industry Co., Ltd.), whose viscosity is lower than that of the phenol resin used for the prepreg 3, with the addition of epoxy resin modifier (for example, Kane Ace MX 125 made by Kaneka Corporation).

The prepreg 3 is layered on the metal-powder sintered layer 4 on the one surface 21 of the metal plate 2 via the binder 5. The prepreg 3 is prepared by impregnating resin into woven cloth, drying the impregnated cloth, and pressuring the cloth with force larger than the assumed load when using, so that plastic deformation occurs forcedly. For the woven cloth, is used PET fiber as reinforcing resin fiber. Further, PTFE fiber as lubricating resin fiber is woven into the woven cloth in the ratio adapted for the sliding performance required for the multi-layer sliding member 1. As such woven cloth, is used woven cloth woven with two-folded yarn (for example, obtained by twisting single twist yarn of PTFE fiber and single twist yarn of PET fiber together) both as the warp and as the weft. Further, as the resin impregnated into the woven cloth, is used phenol resin, which has high compatibility with the PET fiber used for the woven cloth and is superior in strength properties. As the phenol resin, there is resol-type phenol resin, for example. Also, it is possible to use the resol-type phenol resin with the addition of lubricating resin powder such as PTFE powder.

Next, methods for manufacturing the multi-layer sliding member 1 of the above-described structure will be described.

### [First Manufacturing Method]

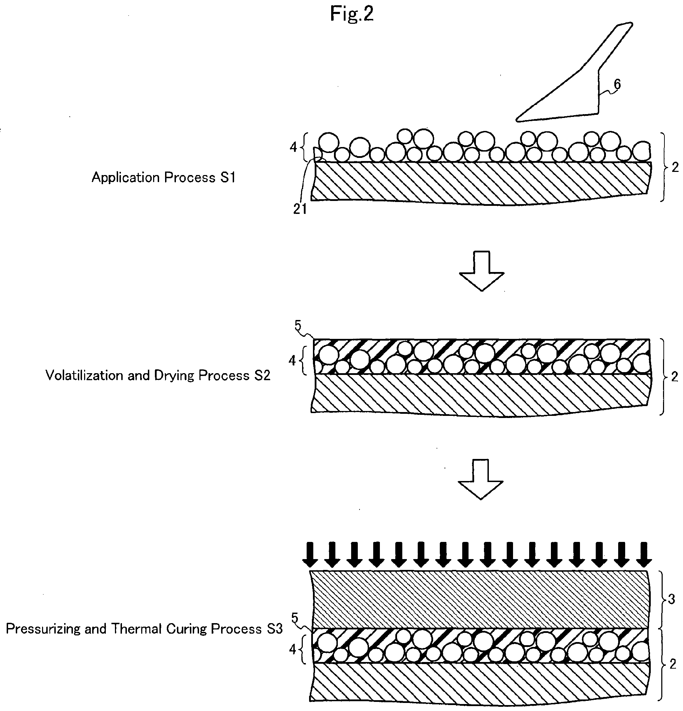

Fig. 2 is a view for explaining a manufacturing process according to a first method for manufacturing the multi-layer sliding member 1 of the above-described embodiment.

The manufacturing process of the first manufacturing method comprises: an application process S1; a volatilization and drying process S2; and, a pressurizing and thermal curing process S3. These processes are performed sequentially.

### <Application Process S1>

The binder 5 is applied onto the metal-powder sintered layer 4 on the one surface 21 of the metal plate 2 by using a brush or spatula 6. As a result, the metal-powder sintered layer 4 on the one surface 21 of the metal plate 2 is impregnated with the binder 5. The binder 5 used here has high compatibility with phenol resin used for the prepreg 3, and is a low-viscosity thermosetting resin. For example, is used Resitop PL-4222, which is a low-viscosity phenol resin made by Gunei Chemical Industry Co., Ltd., with the addition of Kane Ace MX 125, which is an epoxy resin modifier made by Kaneka Corporation.

### <Volatilization and Drying Process S2>

The metal plate 2 having the metal-powder sintered layer 4 with the applied binder 5 is heated to volatilize the solvent (methanol) contained in the binder 5. Then, the metal plate 2 having the metal-powder sintered layer 4 is placed in a drying oven, to perform first drying of the metal plate 2 having the metal-powder sintered layer 4 impregnated with the applied binder 5.

### <Pressurizing and Thermal Curing Process S3>

The prepreg 3 is layered on the metal-powder sintered layer 4 impregnated with the binder 5 on the metal plate 2. The resultant layered body is heated while being pressurized with force larger than the assumed maximum load when using the multi-layer sliding member 1 (for example, with pressure larger than the allowable stress) by a compacting machine in the direction of pressing the prepreg 3 on the metal-powder sintered layer 4 on the metal plate 2. As a result, the phenol resin in the prepreg 3 and the binder 5 are cured. At that time, the binder 5 oozed from the metal-powder sintered layer 4 bonds strongly to the prepreg 3 which uses the phenol resin having high compatibility with the binder 5, and at the same time the binder 5 impregnated into the metal-powder sintered layer 4 bonds strongly to the metal-powder sintered layer 4 and the surface 21 of the metal plate 2. As a result, the metal plate 2 and the prepreg 3 bond to each other via the metal-powder sintered layer 3 and the binder 5. Further, by pressurizing with force larger than the assumed maximum load at the time of using the multi-layer sliding member 1, the sliding layer is plastically deformed forcedly. Here, when the multi-layer sliding member 1 is used for a toggle bearing, allowable stress is usually about 1 ton/cm². However, the applied pressure here is smaller than the joint strength between the metal plate 2 and the sliding layer, so that the sliding layer is not separated from the metal plate 2 at the time of pressurizing. Further, the applied pressure does not exceed the compressive strength of the metal-powder sintered layer 4 and the compressive strength of the metal plate 2, so that favorably only the sliding layer has plastically deformation, and the metal-powder sintered layer 4 and the metal plate 2 don't have plastically deformation. If the metal-powder sintered layer 4 or the metal plate 2 has plastically deformation, a crack may be generated and may affect sliding performance, durability and the like of the multi-layer sliding member 1.

According to the above-described processes, the multi-layer sliding member 1 is completed by forming the sliding layer of the prepreg 3 on the metal-powder sintered layer 4 on the metal plate 2 which is the backing material, and here the prepreg 3 is plastically deformed forcedly by pressurizing with force larger than the assumed load when using.

### [Second Manufacturing Method]

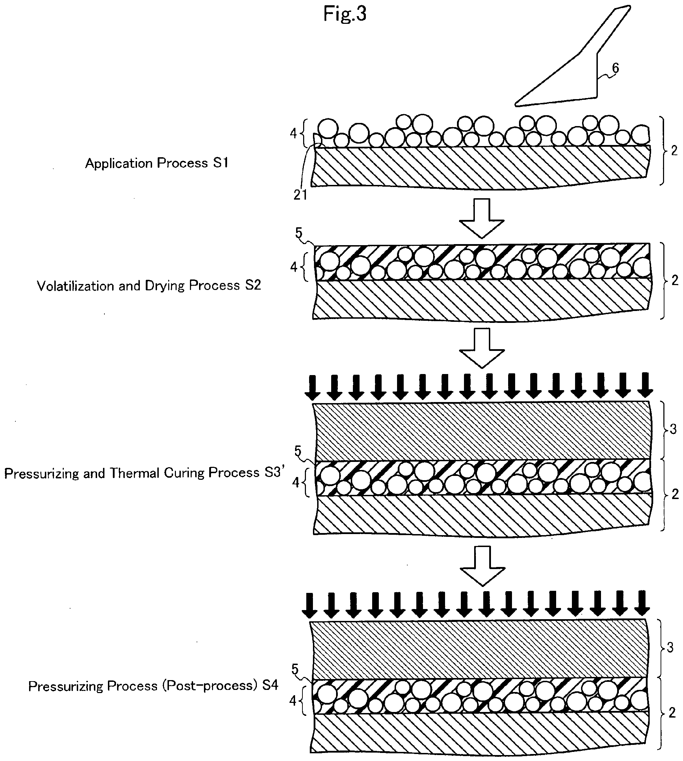

Fig. 3 is a view for explaining a manufacturing process according to a second method for manufacturing the multi-layer sliding member 1 of the above-described embodiment.

The manufacturing process of the second manufacturing method comprises: an application process S1; a volatilization and drying process S2; a pressurizing and thermal curing process S3'; and a pressurizing process (post-process) S4. These processes are performed sequentially. Here, the application process S1 and the volatilization and drying process S2 are similar to the application process S1 and the volatilization and drying process S2 of the manufacturing process of the first manufacturing method, and their description is omitted.

### <Pressurizing and Thermal Curing Process S3'>

The prepreg 3 is layered on the metal-powder sintered layer 4 impregnated with the binder 5 on the metal plate 2. The resultant layered body is heated while being pressurized by a compacting machine in the direction of pressing the prepreg 3 on the metal plate 2. As a result, the phenol resin of the prepreg 3 and the binder 5 are cured. At that time, the binder 5 oozed from the metal-powder sintered layer 4 bonds strongly to the prepreg 3 which uses the phenol resin having high compatibility with the binder 5, and at the same time the binder 5 impregnated into the metal-powder sintered layer 4 bonds strongly to the metal-powder sintered layer 4 and the surface 21 of the metal plate 2. As a result, the metal plate 2 and the prepreg 3 bond to each other via the metal-powder sintered layer 4 and the binder 5.

### <Pressurizing Process (Post-process) S4>

When the sliding layer of the prepreg 3 is formed on the metal-powder sintered layer 4 of the metal plate 2 which is the backing material, pressurizing is performed by a compacting machine with force larger than the assumed maximum load at the time of using the multi-layer sliding member 1 (for example, with pressure larger than the allowable stress), so that the sliding layer is plastically deformed forcedly. However, as described with respect to the pressurizing and thermal curing process S3 of the first manufacturing method, the applied pressure in the present pressurizing process is smaller than the joint strength between the metal plate 2 and the sliding layer, so that the sliding layer is not separated from the meal plate 2 when pressurizing. Further, the applied pressure does not exceed the compressive strength of the metal-powder sintered layer 4 and the compressive strength of the metal plate 2, so that, favorably, only the sliding layer has plastically deformation, and the metal-powder sintered layer 4 and the metal plate 2 don't have plastically deformation. When the metal plate 2 on which the sliding layer is formed is pressurized, heating can be performed at a temperature taking into consideration the temperature of the environment in which the multi-layer sliding member 1 is used. By pressurizing the metal plate 2 at the temperature taking into consideration the temperature when using so as to make the sliding layer plastically deform, it is possible to reduce further the possibility that the sliding layer undergoes creep-deformation during use of the multi-layer sliding member 1.

According to the above-described processes, the multi-layer sliding member 1 is completed by forming the sliding layer of the prepreg 3 on the metal-powder sintered layer 4 on the metal plate 2 which is the backing material, and further by pressurizing the sliding layer with force larger than the assumed load when using so as to make the sliding layer plastically deform forcedly.

Hereinabove, the embodiments of the present invention have been described.

In the above-described embodiments, relatively-inexpensive PET fiber is used as the reinforcing resin fiber for the woven cloth of the prepreg 3. Accordingly, the material cost of the woven cloth is reduced and as a result the cost of the multi-layer sliding member 1 can be reduced. Further, the prepreg 3 is used whose woven cloth is impregnated with phenol resin having high compatibility with the binder 5 that is applied to the metal-powder sintered layer 4 on the surface 21 of the metal plate 2. Thus, the woven cloth of the prepreg 3 does not require a special weave that scatters part of the fiber having high compatibility with the binder 5 in the surface of the woven cloth. This also reduces the manufacturing cost of the woven cloth, and can further reduce the cost of the multi-layer sliding member 1.

Further, the woven cloth of the prepreg 3 is previously impregnated with phenol resin having high compatibility with the PET fiber which is the reinforcing resin fiber of the woven cloth of the prepreg 3. Thus, it is not necessary to impregnate the woven cloth with the binder 5 applied to the metal-powder sintered layer 4 on the one surface 21 of the metal plate 2. Accordingly, since it is not necessary to hold the binder 5 in a prescribed thickness on the metal-powder sintered layer 4 for a prescribed period of time, the low-viscosity binder 5 can be used, and thus the binder 5 can be applied onto the metal-powder sintered layer 4 smoothly. This improves the efficiency of manufacturing the multi-layer sliding member 1.

Further, since the above-described embodiments use the low-viscosity binder 5, bubbles of gas or the like are hardly brought in the binder 5. This can reduce influence on the quality of the multi-layer sliding member 1.

Further, in the above-described embodiments, the PET fiber used as the reinforcing resin fiber for the woven cloth of the prepreg 3 is elastic. Thus, for example, in the case where a sliding bearing is formed by bending the multi-layer sliding member 1 into a cylindrical shape, stress generated between the metal plate 2 and the prepreg 3 by the bending work is absorbed by expansion and contraction of the PET fiber. This prevents separation of the prepreg 3 from the metal-powder sintered layer 4 on the metal plate 2.

Further, in the above-described embodiments, the sliding layer is plastically deformed forcedly at the time of manufacturing by pressurizing with force larger than the assumed maximum load when using the multi-layer sliding member 1. By this, it is possible to reduce the possibility that the sliding layer undergoes creep-deformation in the course of long-term use of the multi-layer sliding member 1 under high load. Accordingly, it is possible to suppress the amount of the dimension change even in the course of long-term use under high load. Thus, it is possible to realize the multi-layer sliding member 1 which can keep good sliding performance even under such harsh conditions.

Further, in the above-described embodiments, PTFE fiber is woven as lubricating resin fiber into the woven cloth of the prepreg 3 in the ratio adapted for the sliding performance required for the multi-layer sliding member 1. Thus, it is possible to realize the multi-layer sliding member 1 having the desired sliding performance suitable for its use.

Further, in the above-described embodiments, the metal-powder sintered layer 4 is formed on the surface 21 of the metal plate 2. Thus, for example, in the case where the multi-layer sliding member 1 is bent into a cylindrical shape to form a sliding bearing, the stress generated between the metal plate 2 and the prepreg 3 by the bending work can be absorbed by moderate collapse of voids between metal powder particles 41 of the metal-powder sintered layer 4. This can prevent separation of the prepreg 3 from the metal plate 2 more efficiently.

Further, in the above-described embodiments, lubricating resin powder such as PTFE powder is added to and dispersed in phenol resin used for the prepreg 3. Accordingly, it is possible to lessen the amount of expensive lubricating resin fiber such as PTFE fiber or the like used for the woven cloth of the prepreg 3. As a result, the cost of the woven cloth can be reduced furthermore, and the cost of the multi-layer sliding member 1 as a whole can be reduced furthermore. Further, depending on the required sliding performance, the lubricating resin fiber such as PTFE fiber can be completely omitted from the woven cloth, and this can realize a cheaper multi-layer sliding member 1.

Further, in the above-described embodiments, the volatilization and drying process S2 is performed prior to the pressurizing and thermal curing process S3, so as to volatilize the solvent contained in the binder 5 applied onto the metal-powder sintered layer 4 on the metal plate 2. Thus, it is possible to reduce further the possibility that bubbles of gas or the like are formed in the binder 5 in the pressurizing and thermal curing process S3. Accordingly, it is possible to reduce further the effects of the binder 5 on the quality of the multi-layer sliding member 1.

The present invention is not limited to the above-described embodiments, and can be variously changed within the scope of the invention.

For example, in the above-described embodiments, the metal-powder sintered layer 4 formed on the surface 21 of the metal plate 2, and the prepreg 3 can be made to adhere to the surface 21 of the metal plate 2 directly with the binder 5. In the case where a sliding bearing is formed by bending thus-manufactured multi-layer sliding member 1 into a cylindrical shape, the stress generated between the metal plate 2 and the prepreg 3 by the bending work is absorbed by expansion and contraction of PET fiber used as the reinforcing resin fiber for the woven cloth of the prepreg 3. Thus, it is possible to prevent separation of the prepreg 3 from the metal plate 2. Further, by omitting the metal-powder sintered layer 4, it becomes unnecessary to consider creep of the metal-powder sintered layer 4 owing to the pressurizing in the pressurizing and thermal curing process S3.

Further, in the above-described embodiments, one sheet of prepreg 3 forms the sliding layer. However, the sliding layer may be formed by a plurality of sheets of prepreg 3. That is to say, in the pressurizing and thermal curing process S3, a plurality of sheets of prepreg 3 are layered on the one surface 21 of the metal plate 2 to which the binder 5 has been applied or on the metal-powder sintered layer 4. The resultant layered body is heated to cure phenol resin and the binder 5 in each layer of prepreg 3 while being pressurized by a compacting machine in the direction of pressing the prepreg 3 on the metal plate 2. This enables forming of a thick sliding layer on the metal plate 2. As a result, for example, the degree of freedom is increased in adjusting the inner diameter of a cylindrically-shaped sliding bearing by cutting the sliding surface, and the dimension accuracy is improved.

Further, in the above-described embodiments, the metal plate 2, whose post-processing is easy, is used as the backing material. However, other material can be used as the backing material depending on uses of the multi-layer sliding member 1.

In the above description, material for a cylindrically-shaped sliding bearing is mentioned as a use of the multi-layer sliding member 1 of the embodiment. However, the layer structure of the multi-layer sliding member 1 of the embodiment can be applied to various parts that require sliding performance.

### Industrial Applicability

The present invention can be widely applied to various parts requiring sliding performance.

### Reference Signs List

1: multilayer sliding member; 2: metal plate (backing material); 3: prepreg (sliding layer); 4: metal-powder sintered layer; 5: binder; 6: spatula; 21: surface of the metal plate 2; and 41: metal powder particle.

## Claims

1. A method for manufacturing a multi-layer sliding member (1) with a sliding layer formed on a backing material, comprising the steps of:
applying (S1) a binder (5) on a surface of the backing material; and
forming (S3) the sliding layer which has plastic deformation, by layering, on the surface of the backing material, at least one sheet of prepreg (3) formed by impregnating phenol resin into woven cloth, and by thermally curing a layered body of the backing material and the prepreg while pressurizing the layered body with a force larger than the maximum load in use,
wherein low-viscosity thermosetting resin having high compatibility with the phenol resin used for the prepreg is used as the binder;
**characterised in that**
the backing material is a metal plate (2), and a metal-powder sintered layer (4) is formed on a surface of the metal plate; and
in the step of forming the sliding layer, the woven cloth includes PET fiber as reinforcing resin fiber and the layered body is thermally cured while pressurizing the layered body with a pressure smaller than pressure which plastically deforms the metal-powder sintered layer.

2. A method for manufacturing a multi-layer sliding member with a sliding layer formed on a backing material, comprising the steps of:
applying (S1) a binder (5) on a surface of the backing material;
forming (S3') the sliding layer by layering, on the surface of the backing material, at least one sheet of prepreg (3) formed by impregnating phenol resin into woven cloth, and by thermally curing a layered body of the backing material and the prepreg while pressurizing the layered body; and
making (S4) the sliding layer having plastic deformation by pressurizing, with a force larger than the maximum load in use, the backing material on which the sliding layer is formed, wherein:
as the binder, is used a low-viscosity thermosetting resin having high compatibility with the phenol resin used for the prepreg;
**characterised in that**
the backing material is a metal plate (2), and a metal-powder sintered layer (4) is formed on a surface of the metal plate; and
in the step of making the sliding layer undergo plastic deformation, the woven cloth includes PET fiber as reinforcing resin fiber and the backing material on which the sliding layer is formed, is pressurized with a pressure smaller than pressure which plastically deforms the metal-powder sintered layer.

3. The method of Claim 1 or 2, further comprising:
volatilizing (S2) solvent contained in the binder (5) applied to the backing material prior to the step of forming the sliding layer (S3; S3').

## Patentansprüche

1. Verfahren zum Herstellen eines mehrschichtigen Gleitelements (1) mit einer Gleitschicht, die auf einem Verstärkungsmaterial gebildet ist, umfassend die folgenden Schritte:
Anwenden (S1) eines Bindemittels (5) auf eine Oberfläche des Verstärkungsmaterials und
Ausbilden (S3) der Gleitschicht, die plastische Verformung aufweist, durch Schichten, auf der Oberfläche des Verstärkungsmaterials, mindestsens einer Lage von Prepreg (3), die durch Imprägnieren von Phenolharz in Webstoff gebildet ist, und durch thermisches Aushärten eines geschichteten Körpers des Verstärkungsmaterials und des Prepregs, während der geschichtete Körper mit einer Kraft unter Druck gesetzt wird, die größer als die Maximallast bei Verwendung ist,
wobei thermohärtender Harz mit niedriger Viskosität, der eine hohe Kompatibilität mit dem für das Prepreg verwendeten Phenolharz aufweist, als das Bindemittel verwendet wird;
**gekennzeichnet dadurch, dass**
das Verstärkungsmaterial eine Metallplatte (2) ist und eine metallpulvergesinterte Schicht (4) auf einer Oberfläche der Metallplatte gebildet ist und
beim Bilden der Gleitschicht der Webstoff PET-Fasern als verstärkende Kunstharzfasern enthält und der geschichtete Körper thermisch ausgehärtet wird, während der geschichtete Körper unter einen Druck gesetzt wird, der kleiner als der Druck ist, der die metallpulvergesinterte Schicht plastisch verformt.

2. Verfahren zum Herstellen eines mehrschichtigen Gleitelements (1) mit einer Gleitschicht, die auf einem Verstärkungsmaterial gebildet ist, umfassend die folgenden Schritte:
Anwenden (S1) eines Bindemittels (5) auf eine Oberfläche des Verstärkungsmaterials;
Ausbilden (S3') der Gleitschicht durch Schichten, auf der Oberfläche des Verstärkungsmaterials, mindestens einer Lage von Prepreg (3), die durch Imprägnieren von Phenolharz in Webstoff gebildet wird, und durch thermisches Aushärten eines geschichteten Körpers des Verstärkungsmaterials und des Prepregs, während der geschichtete Körper unter Druck gesetzt wird; und
Versehen (S4) der Gleitschicht mit plastischer Deformation, indem das Verstärkungsmaterial, auf dem die Gleitschicht ausgebildet wird, mit einer Kraft unter Druck gesetzt wird, die größer als die Maximallast bei Verwendung ist, wobei:
als das Bindemittel ein thermohärtender Kunstharz mit niedriger Viskosität, der eine hohe Kompatibilität mit dem für das Prepreg verwendeten Phenolharz aufweist, verwendet wird;
**gekennzeichnet dadurch, dass**
das Verstärkungsmaterial eine Metallplatte (2) ist und eine metallpulvergesinterte Schicht (4) auf einer Oberfläche der Metallplatte gebildet wird und
beim Versehen der Gleitschicht mit plastischer Deformation der Webstoff PET-Fasern als verstärkende Kunstharzfasern enthält und das Verstärkungsmaterial, auf dem die Gleitschicht gebildet wird, unter einen Druck gesetzt wird, der niedriger als der Druck ist, der die metallpulvergesinterte Schicht plastisch verformt.

3. Verfahren nach Anspruch 1 oder 2 ferner umfassend:
Verflüchtigen (S2) von Lösemittel, das im Bindemittel (5) enthalten ist, das auf das Verstärkungsmaterial angewendet wird, vor dem Ausbilden der Gleitschicht (S3; S3').

## Revendications

1. Procédé de fabrication d'un élément de glissement multicouche (1) avec une couche de glissement formée sur un matériau de dos, comprenant les étapes de :
application (S1) d'un liant (5) sur une surface du matériau de dos; et
formation (S3) de la couche de glissement qui a une déformation plastique par stratification, sur la surface du matériau de dos, d'au moins une feuille de préimprégné (3) formée par imprégnation d'une résine phénolique dans une étoffe tissée, et par durcissement thermique d'un corps stratifié du matériau de dos et du préimprégné tout en mettant sous pression le corps stratifié avec une force supérieure à la charge maximum à l'utilisation,
dans lequel une résine thermodurcissable basse viscosité ayant une compatibilité élevée avec la résine phénolique utilisée pour le préimprégné est utilisée comme le liant ;
**caractérisé en ce que**
le matériau de dos est une plaque métallique (2), et une couche frittée de poudre métallique (4) est formée sur une surface de la plaque métallique ; et
à l'étape de formation de la couche de glissement, l'étoffe tissée inclut une fibre de PET comme fibre de résine de renfort et le corps stratifié est durci thermiquement tout en mettant sous pression le corps stratifié avec une pression plus petite qu'une pression qui déforme plastiquement la couche frittée de poudre métallique.

2. Procédé de fabrication d'un élément de glissement multicouche avec une couche de glissement formée sur un matériau de dos, comprenant les étapes de :
application (S1) d'un liant (5) sur une surface du matériau de dos ;
formation (S3') de la couche de glissement par stratification, sur la surface du matériau de dos, d'au moins une feuille de préimprégné (3) formée par imprégnation d'une résine phénolique dans une étoffe tissée, et par durcissement thermique d'un corps stratifié du matériau de dos et du préimprégné tout en mettant sous pression le corps stratifié ; et
soumission (S4) de la couche de glissement à une déformation plastique par mise sous pression, avec une force supérieure à la charge maximum à l'utilisation, du matériau de dos sur lequel la couche de glissement est formée, dans lequel :
comme le liant, est utilisée une résine thermodurcissable basse viscosité ayant une compatibilité élevée avec la résine phénolique utilisée pour le préimprégné ;
**caractérisé en ce que**
le matériau de dos est une plaque métallique (2), et une couche frittée de poudre métallique (4) est formée sur une surface de la plaque métallique ; et
à l'étape de soumission de la couche de glissement à une déformation plastique, l'étoffe tissée inclut une fibre de PET comme fibre de résine de renfort et le matériau de dos sur lequel la couche de glissement est formée, est mis sous pression avec une pression plus petite qu'une pression qui déforme plastiquement la couche frittée de poudre métallique.

3. Procédé selon la revendication 1 ou 2, comprenant en outre :
la volatilisation (S2) d'un solvant contenu dans le liant (5) appliqué au matériau de dos avant l'étape de formation de la couche de glissement (S3 ; S3').
